# EUROPÄISCHE PATENTSCHRIFT

(11) **EP 1 720 189 B1**
(45) Veröffentlichungstag und Bekanntmachung des Hinweises auf die Patenterteilung: **13.08.2008**
(21) Anmeldenummer: 06008317.7
(22) Anmeldetag: 21.04.2006
(51) Int. Cl.: H01J 5/12, H01J 61/34, H01K 1/34

(54) **Doppelwandige elektrische Lampe**
Double-walled electrical lamp
Lampe électrique à double paroi

(30) Priorität: 02.05.2005 DE 102005020344
(43) Veröffentlichungstag der Anmeldung: 08.11.2006
(73) Patentinhaber: Patent-Treuhand-Gesellschaft für elektrische Glühlampen mbH, 81543 München (DE)
(72) Erfinder: Genz, Andreas, Dr., 10711 Berlin (DE); Grabinski, Leon, 13503 Berlin (DE); Gräf, Jürgen, 86163 Augsburg (DE)

(56) Entgegenhaltungen:
- EP-A- 0 465 083
- EP-A- 0 588 602
- EP-A- 1 492 146

## Beschreibung

### Technisches Gebiet

Die Erfindung betrifft eine Elektrische Lampe mit Außenkolben gemäß dem Oberbegriff des Anspruchs 1. Es handelt sich dabei insbesondere um Metallhalogenidlampen, Quecksilber-Hochdruckentladungslampen, aber auch Halogenglühlampen mit Außenkolben. Der Innenkolben der Lampe ist mit Abdichtungsteilen zweiseitig verschlossen. Der Außenkolben ist an einer oder beiden Abdichtungsteilen befestigt.

### Stand der Technik

Aus der EP-A 465 083 und der EP-A 588 602 ist bereits eine Elektrische Lampe mit Außenkolben bekannt, wobei diese Lampe einen Brenner aufweist, der von einem Außenkolben umgeben ist, der am Abdichtungsteil befestigt ist. Zur besseren Verbindung ist dabei am Abdichtungsteil insbesondere ein radialer Wulst vorgesehen, auf dem das Ende des Außenkolben aufliegt und dort mit dem Wulst verschmolzen ist.

Aus der EP 1 492 146 ist eine Lampe mit Außenkolben bekannt, die jedoch nicht für kompakte Leuchten eingesetzt werden kann. In derartigen Situationen ist die Temperaturbelastung der Lampe sehr hoch, so dass besondere konstruktive Maßnahmen ergriffen werden müssen.

### Darstellung der Erfindung

Es ist Aufgabe der vorliegenden Erfindung, eine Lampe gemäß dem Oberbegriff des Anspruchs 1 bereitzustellen, die eine hohe Temperaturbelastung ertragen kann, und die insbesondere eine lange Lebensdauer gewährleistet. Durch eine kompakte Lampenform sind kleinere und kostengünstigere Leuchten möglich.

Diese Aufgabe wird durch die kennzeichnenden Merkmale des Anspruchs 1 gelöst. Besonders vorteilhafte Ausgestaltungen finden sich in den abhängigen Ansprüchen.

Die erfindungsgemäße Lampe besitzt ein vakuumdicht abgeschlossenen Innenkolben, insbesondere ein Entladungsgefäß, das eine Lampenachse definiert, und das an einander gegenüberliegenden Enden durch Abdichtungsteile verschlossen ist.

Das Abdichtungsteil ist eine Quetschung oder auch Einschmelzung. Das Leuchtmittel im Innern der Lampe ist ein Entladungsbogen zwischen zwei Elektroden oder ein Leuchtkörper. Es ist mit den zu ihm führenden inneren Stromzuführungen elektrisch leitend verbunden. Das Abdichtungsteil ist insbesondere mit einer nach außen abstehenden Verlängerung versehen, die als hohles Rohr ausgebildet ist im folgenden wird der Begriff Entladungsgefäß für den Innenkolben beispielhaft ohne Einschränkung verwendet.

Bisherige Versuche, kompakte Lampen der gattungsgemäßen Art zu schaffen, erzielten nur Lebensdauer von maximal 2000 Std., so daß derartige Lampen nur für fotooptische Anwendungen geeignet waren.

Erfindungsgemäß wird ein besonderes Augenmerk auf die Regelung der Temperatur am äußeren Ende der Molybdänfolie in der Abdichtung des Entladungsgefäßes gelegt. Da das Entladungsgefäß nicht komplett von einem Außenkolben umschlossen ist, kommt diese Stelle mit Luft in Berührung. Das Molybdän kann oxidieren, was den Stromfluss unterbricht. Deshalb wird jetzt eine entscheidende Maßnahme ergriffen, nämlich die Verkürzung des Außenkolbens. Als Länge des Außenkolbens wird sein zentraler Teil verstanden, ohne etwaige an die Abdichtung angepasste Teile. Dabei hat sich als wesentlich herausgestellt, dass die derart definierte Länge des Außenkolbens, verglichen mit der Länge des Entladungsgefäßes, verstanden als Länge von dessen Innenvolumen, nur zwischen dem 1,3 und 4-fachen dieser Länge beträgt. Insbesondere ist ein Wert bevorzugt zwischen dem 1,5 und 3-fachen, besonders bevorzugt ist maximal ein Wert vom 2,5-fachen.

Dabei soll insbesondere der Außenkolben möglichst eng am Entladungsgefäß anliegen. Ein günstiger Wert für das Verhältnis zwischen Durchmesser des Außenkolbens zu Durchmesser des Entladungsgefäßes ist 1,1 bis 2,5, bevorzugt liegt das Verhältnis zwischen 1,2 und 2,0.

Ein weiterer wichtiges Orientierungsmerkmal ist die Länge des Außenkolbens (zylindrisches Teil) in Relation zur Lampenleistung. Dieses Verhältnis LW sollte zwischen 1,8 und 3,5 W/mm liegen. Ein konkretes Beispiel ist eine 75 W-Lampe mit einer Länge des Außenkolbens von 36 mm, so dass LW = 75W/36mm=2,08 W/mm. Bei einer 150 W-Lampe wird eine Länge des Außenkolbens von 48 mm verwendet, so dass hier gilt LW = 150W/48mm= 3,12 W/mm.

Eine weitere vorteilhafte Maßnahme ist die Verlängerung der Mo-Folien. Dies sollte in Relation zur Länge des Außenkolbens geschehen. Eine hohe Temperaturbelastbarkeit wird insbesondere erzielt, wenn die gesamte Länge der beiden Mo-Folien des Entladungsgefäßes LMO zur Länge des Außenkolbens LAKO zwischen 0,4 und 1 liegt, Randwerte eingeschlossen, insbesondere mindestens 0,45. Bevorzugt ist LMO/LAKO zwischen 0,55 und 0,9. In aller Regel sind dabei beide Folien gleich lang, in speziellen Fällen kann es jedoch günstiger sein, die eine Folie länger als die andere zu machen. Ein konkretes Ausführungsbeispiel ist bei einer 150W-Lampe: 2X17mm/48mm= 0,7; bei einer 70W-Lampe: 2X12/36=0,66. Bei einer konventionellen Lampe beträgt dieses Verhältnis typisch zwischen 0,2 und 0,3.

Eine weitere vorteilhafte Maßnahme ist das sog. Ziehen der Schäfte, das überraschend ebenfalls das Ziel unterstützt, die Temperatur am Ende der Mo-Folie abzusenken. Dabei ist im Falle einer Einschmelzung diese im Übergang vom Innenkolben zum Schaft durch Ziehen verdünnt und wird zum Schaftende wieder dicker. Bevorzugt wird er um 20 bis 60 % dicker. Der Schaft hat konkret an der dünnen Stelle nach dem Innenkolben bei moderater Leistung, typisch 70 bis 150 W, einen Durchmesser von etwa 5 mm und an der Stelle, wo der Außenkolben aufgerollt ist, einen Durchmesser von 7 bis 8 mm.

Bevorzugt ist mindestens ein Abdichtungsteil mit einem, insbesondere ringförmigen, Wulst versehen, der quer zu Lampenachse radial absteht. Eine derartige Gestalt des Wulstes kann entweder nach lokalem Erwärmen durch Stauchen oder Aufblasen erzeugt werden. Noch einfacher ist das Aufbringen einer entsprechend geformten Glasperle.

Der Außenkolben kann ein durchgehendes Rohrstück mit gleichbleibendem Durchmesser sein, aber auch ein Kolben mit zentralem Bauch und endständig daran angrenzenden, insbesondere angesetzten oder angeformten, Rohrstücken.

Eine bevorzugte Ausführungsform sieht ein rohrförmiges Verlängerungsstück des Abdichtungsteils vor, an dem der Wulst angrenzt. Er ist insbesondere angesetzt oder angeformt. Dadurch ist auch bei einer nicht radialsymmetrischen Quetschung die Bereitstellung eines radialsymmetrischen Wulstes möglich. Bei einer Einschmelzung ist ein derartiges Verlängerungsstück nicht unbedingt notwendig. Bevorzugt sind sowohl Innenkolben als auch Außenkolben aus Quarzglas, evtl. auch aus Hartglas.

### Kurze Beschreibung der Zeichnungen

Im folgenden soll die Erfindung anhand mehrerer Ausführungsbeispiele näher erläutert werden. Es zeigen:
- Figur 1: ein Ausführungsbeispiel einer Metallhalogenidlampe in Seitenansicht;
- Figur 2 ;: eine Halogenglühlampe in Seitenansicht;
- Figur 3: eine weiteres Ausführungsbeispiel einer Metallhalogenidlampe.

### Bevorzugte Ausführung der Erfindung

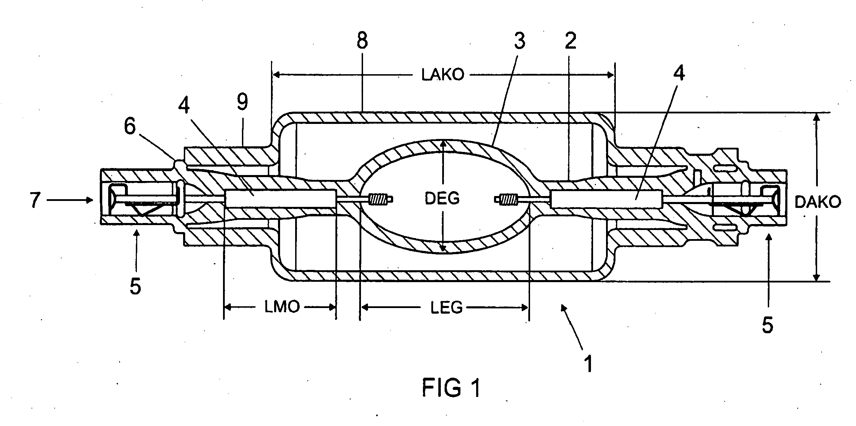

In Figur 1 ist eine Metallhalogenidlampe 1 gezeigt, die durch Einschmelzungen 2 abgedichtet ist. Es handelt sich um eine 150 W Lampe mit einem Entladungsgefäß 3. Die Einschmelzungen haben anfangs einen Durchmesser von 5 mm, der sich in Höhe der Einschmelzfolien 4 aus Molybdän auf 7,3 mm verbreitert. Die Folien sind jeweils 17 mm lang, also ist LMO = 34 mm. Am Ende der Einschmelzung setzt ein kurzes Rohrstück 5 integral an, das mit einem Wulst 6 ausgestattet ist. Im Rohrstück ist ein Sockelteil 7 integriert.

Das Entladungsgefäß ist von einem Außenkolben 8 umgeben, der im wesentlichen zylindrisch gestaltet ist. Er verengt sich in Höhe der Folie zu einem Halsteil 9, das an dem Wulst 6 endet. Der Außenkolben hat eine Länge LAKO von 48 mm, die Gesamtlänge incl. der beiden Halsteile ist 72 mm.

Eine derart kompakte Lampe erreicht trotz hoher Belastung eine Lebensdauer von mindestens 6000 Std., insbesondere sogar mehr als 9000 Std. bei optimaler Gestaltung.

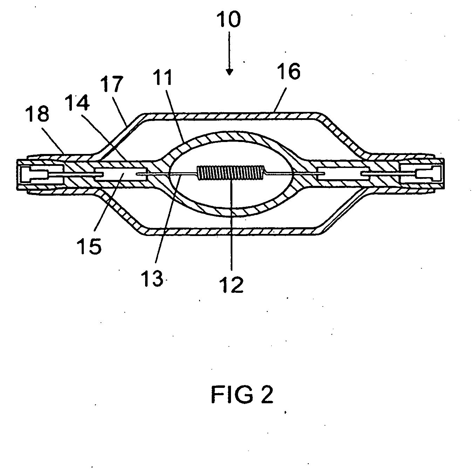

Figur 2 zeigt die seitliche Ansicht einer zweiseitig gequetschten Halogenglühlampe 10. Sie besteht aus einem inneren Kolben 11, in dessen Zentrum ein Leuchtkörper 12 axial angeordnet ist. Die Enden 13 des Leuchtkörpers sind in ihrer Funktion als innere Stromzuführung direkt in die Quetschung 14 eingebettet und dort mit einer Quetschfolie 15 verbunden. Der Außenkolben 16 ist zylindrisch mit abgeschrägten Enden 17, die zusammen die Länge LAKO hier definieren, und einem Halsteil 18, das an der Quetschung 14 anliegt.

Konkrete Bemaßungen sind in der folgenden Tabelle angegeben für Metallhalogenidlampen mit 70 und 150 W Leistung. Sie können auch für Halogenglühlampen als Anhaltspunkt der Bemaßung dienen. Dabei kann die Bemaßung der Metallhalogenidlampen unabhängig von der Lichtfarbe verwendet werden, beispielsweise für warmweiß und neutralweiß.

**Tab. 1**

| Leistung | 75 W | 150 W |
|---|---|---|
| Mittlere Lebensdauer (h) | 9000 | 9000 |
| Elektrodenabstand (mm) | 9 | 15 |
| Durchmesser Innenkolben (in mm) | 11 | 14,9 |
| Länge Innenkolben (in mm) | 16,7 | 24,7 |
| Durchmesser Außenkolben (in mm) | 18,8 | 22,3 |
| Länge LAKO des Außenkolbens (in mm) | 36 | 48 |
| Lampenlänge gesamt (in mm) | 77 | 95 |

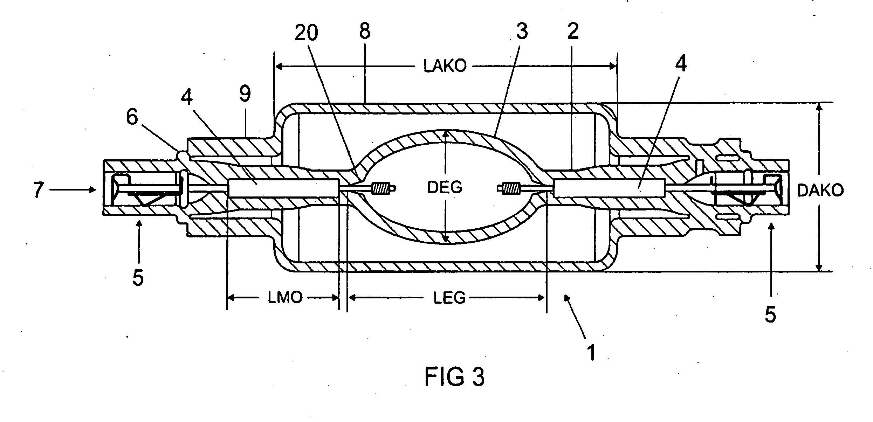

Schließlich zeigt Figur 3 eine Metallhalogenidlampe, bei der das Entladungsgefäß 3 zwar im wesentlichen wie ein Ellipsoid geformt ist, jedoch eine keilförmige Verlängerung 20 am Ende aufweist. Auch hier ist mit LEG die gesamte Innenlänge des Entladungsgefäßes gemeint.

## Patentansprüche

1. Elektrische Lampe mit Außenkolben mit einem vakuumdicht abgeschlossenen, längsgestreckten Innenkolben (1), der eine Längsachse (A) und eine Innenlänge LEG definiert, und der ein Leuchtmittel enthält, und der an zwei einander gegenüberliegenden Enden durch Abdichtungsteile (6; 32) verschlossen ist, wobei ein Außenkolben mit einer Gesamtlänge LAKO und mit zwei Halsteilen dem Innenkolben übergestülpt ist und wobei die Halsteile an den Abdichtungsteilen befestigt sind wobei die Abdichtungsteile Folien enthalten, **dadurch gekennzeichnet, dass** das Verhältnis zwischen der Gesamtlänge des Außenkolbens LAKO und der Innenlänge des Innenvolumens LEG zwischen 1,3 und 4, bevorzugt 1,5 und 3, liegt.

2. Lampe nach Anspruch 1, **dadurch gekennzeichnet, dass** der Innenkolben einen maximalen Durchmesser DEG und der Außenkolben einen maximalen Durchmesser DAKO besitzt, wobei das Verhältnis DAKO/DEG zwischen 1,1 und 2,5, bevorzugt zwischen 1,2 und 2.0 liegt.

3. Lampe nach Anspruch 1, **dadurch gekennzeichnet, dass** die Länge des Außenkolbens LAKO (in mm) auf die Nennleistung P (in W) der Lampe abgestimmt ist, so dass das Verhältnis P/LAKO zwischen 1,8 und 3,5 W/mm liegt.

4. Lampe nach Anspruch 1, **dadurch gekennzeichnet, dass** die Länge der beiden Folien LMO, auf die Länge des Außenkolbens LAKO abgestimmt ist, so dass das Verhältnis LMO/LAKO zwischen 0,4 und 1,0 beträgt, insbesondere zwischen 0,55 und 0,9.

5. Lampe nach Anspruch 1, **dadurch gekennzeichnet, dass** die Abdichtungen als Einschmelzungen ausgeführt sind, wobei der Durchmesser der Einschmelzung sich von innen nach außen vergrößert.

6. Lampe nach Anspruch 5, **dadurch gekennzeichnet, dass** der Durchmesser in Höhe des entladungsfernen Endes der Folie zwischen 120 und 160 % des Durchmessers in der Nähe des Innenvolumens ausmacht.

## Claims

1. Electric lamp having an outer bulb having an elongate inner bulb (1), which is sealed in a vacuum-tight manner, defines a longitudinal axis (A) and an inner length LEG, contains a luminous means and is sealed at two mutually opposing ends by sealing parts (6; 32), an outer bulb having a total length LAKO and having two neck parts being turned over the inner bulb, and the neck parts being fixed to the sealing parts, the sealing parts containing foils, **characterized in that** the ratio between the total length of the outer bulb LAKO and the inner length of the inner volume LEG is between 1.3 and 4, preferably 1.5 and 3.

2. Lamp according to claim 1, **characterized in that** the inner bulb has a maximum diameter DEG, and the outer bulb has a maximum diameter DAKO, the ratio DAKO/DEG being between 1.1 and 2.5, preferably 1.2 and 2.0.

3. Lamp according to claim 1, **characterized in that** the length of the outer bulb LAKO (in mm) is matched to the rated power P (in W) of the lamp, with the result that the ratio P/LAKO is between 1.8 and 3.5 W/mm.

4. Lamp according to claim 1, **characterized in that** the length of the two foils, LMO, is matched to the length of the outer bulb LAKO, with the result that the ratio LMO/LAKO is between 0.4 and 1.0, in particular between 0.55 and 0.9.

5. Lamp according to claim 1, **characterized in that** the seals are in the form of fuse seals, the diameter of the fuse seal increasing in size from the inside outwards.

6. Lamp according to claim 5, **characterized in that** the diameter at the level of that end of the foil which is remote from the discharge makes up between 120 and 160% of the diameter in the vicinity of the inner volume.

## Revendications

1. Lampe électrique ayant une ampoule extérieure comprenant une ampoule intérieure (1) s'étendant en longueur, fermée de façon étanche au vide, qui définit un axe longitudinal (A) et une longueur intérieure LEG et contient un moyen d'éclairage, et qui est fermée à ses deux extrémités opposées par des pièces d'étanchéité (6 ; 32), une ampoule extérieure ayant une longueur totale LAKO et deux parties de col étant retournées sur l'ampoule intérieure et les parties de col étant fixées aux pièces d'étanchéité, les pièces d'étanchéité comportant des rubans, **caractérisée en ce que** le rapport entre la longueur totale de l'ampoule extérieure LAKO et la longueur intérieure du volume intérieur LEG est compris entre 1,3 et 4, de préférence entre 1,5 et 3.

2. Lampe selon la revendication 1, **caractérisée en ce que** l'ampoule intérieure a un diamètre maximal DEG et l'ampoule extérieure a un diamètre maximal DAKO, le rapport DAKO/DEG étant compris entre 1,1 et 2,5, de préférence entre 1,2 et 2,0.

3. Lampe selon la revendication 1, **caractérisée en ce que** la longueur de l'ampoule extérieure, LAKO (en mm), est adaptée à la puissance nominale P (en W) de la lampe, de telle façon que le rapport P/LAKO soit compris entre 1,8 et 3,5 W/mm.

4. Lampe selon la revendication 1, **caractérisée en ce que** la longueur des deux rubans, LMO, est adaptée à la longueur de l'ampoule extérieure, LAKO, de telle façon que le rapport LMO/LAKO soit compris entre 0,4 et 1,0, en particulier entre 0,55 et 0,9.

5. Lampe selon la revendication 1, **caractérisée en ce que** les éléments d'étanchéité sont réalisés sous forme de scellements, le diamètre du scellement allant en s'élargissant de l'intérieur vers l'extérieur.

6. Lampe selon la revendication 5, **caractérisée en ce que** le diamètre, au niveau de l'extrémité du ruban, éloignée de la décharge, représente entre 120 et 160 % du diamètre situé à proximité du volume intérieur.
